# EUROPEAN PATENT APPLICATION

(11) **EP 1 109 405 A1**
(43) Date of publication of application: **20.06.2001**
(21) Application number: 00118322.7
(22) Date of filing: 23.08.2000
(51) Int. Cl.: H04N 7/16, H04N 7/24

(54) **Communication with receiver/decoder**

(30) Priority: 16.12.1999 EP 99403178
(71) Applicant: CANAL+ Société Anonyme, 75711 Paris Cedex 15 (FR)
(72) Inventor: Fichet, Laurent, 78320 Le Mesnil Saint Denis (FR)
(74) Representative: Cozens, Paul Dennis

(57) **Abstract**

The present invention provides a method of sending data to a receiver/decoder, comprising routing the data to the receiver/decoder. The method preferably further comprises selecting a path between a sender of the data and the receiver/decoder and sending the data along the selected path. The invention finds particular application in the field of conditional access data.

## Description

The present invention relates to a receiver/decoder, a broadcast centre, a subscription data processing facility, a broadcast system, a server, a packet, a carrier signal, a computer program product, a computer readable medium and methods of sending data to and from a receiver/decoder.

The invention has particular application in the context of sending data, particularly conditional access data, from a broadcast centre to a receiver/decoder.

Digital television systems transmit television channels to the viewer in digital, rather than analogue, form. The digital channels are encoded into a digital data stream at the transmitter end, and are decoded at the receiver end using a digital decoder, which may be either in a digital set-top box (DSTB) or in an integrated digital television. To allow interactivity, an uplink may be provided, either via the same medium that delivers the television channels, or else via a different medium such as a telephone link. Further types of data, such as digital audio, software and interactive data can be or are also broadcast. As used herein, the term "digital television system" includes for example any satellite, terrestrial, cable and other system.

In a cable-based digital television system, in which the present invention finds particular utility, the transmitter is usually physically linked to the receiver by a cable television delivery network. Early cable television systems had one downstream frequency range for the transmission of the broadcast data, and no upstream frequency band (return path). Later network architectures, typically using Hybrid Fibre Coax (HFC), provided additional upstream channels (usually out-of-band) for the provision of interactive services.

In addition to the audiovisual programme data, many prior art systems broadcast additional data, such as conditional access data and Electronic Programme Guide (EPG) data, in the programme stream. European Patent Application No. 0 968 609 in the name of Canal+ SA, the subject matter of which is incorporated herein by reference, discloses such a system. In this system, a broadcast centre in a broadcast system transmits additional non-audiovisual information and interactive data to receiver/decoders by means of messages which are multiplexed with the programme stream and then decoded by the receiver/decoders.

More specifically, conditional access data, comprising encrypted access rights, is transmitted in the form of entitlement messages, which are a subset of the messages described above. Each message contains address fields which indicate which receiver/decoders should process the message. Messages received by a receiver/decoder which are not addressed to it are ignored.

The subject matter of European Patent Application No. 99403178.9 in the name of Canal+ SA, is also incorporated herein by reference.

The term "broadcasting system" as used herein is preferably not restricted to digital cable television systems, and preferably includes such diverse applications as broadcasting digital audio, video, software, and so on over the Internet.

The present invention seeks to remedy problems encountered with the above prior art.

According to one aspect of the invention, a method is provided of sending data to a receiver/decoder in a broadcast system which broadcasts a signal via a broadcast medium, the method comprising routing the data to the receiver/decoder via the same broadcast medium.

The term "receiver/decoder" as used herein may connote a receiver for receiving either encoded or non-encoded signals, for example television and/or radio signals, which may be broadcast or transmitted by some other means. The term may also connote a decoder for decoding received signals. Embodiments of such receiver/decoders may include a decoder integral with the receiver for decoding the received signals, for example, in a "set-top box", such as a decoder functioning in combination with a physically separate receiver, or such a decoder including additional functions, such as a web browser, a video recorder, or a television.

It has been observed pursuant to the invention that in a broadcast system where data is broadcast, such data relating to a small number of receiver/decoders in comparison to the audience size, each receiver/decoder receives a large quantity of effectively useless information, that is, broadcast messages which are not intended for the receiver/decoder.

By routing the data to a receiver/decoder, however, instead of broadcasting it, more bandwidth can become available for other data to be broadcast or routed. In a particular example, increasing the bandwidth available in a digital television system has importance to the operators of the system, and allows, for example, more channels to be broadcast.

Furthermore, by routing the data via a broadcast medium, advantage can be taken of the existing resources to which the receiver/decoder may be attached, saving the expense and difficulty of creating a new network over which to route the data.

The term "broadcast medium" as used herein preferably connotes any medium capable of carrying a broadcast signal. Such a medium could be, for example, air, copper, a local area network, such as a cable television network, or a wide area network, such as the Internet.

More specifically, the broadcast medium is preferably a cable network, but may be a local network (such as an Ethernet network, for example), and may be a wide area network (such as the Internet, for example). The term "cable network" as used herein preferably connotes any form of network which is capable of delivering high bandwidth data, such as audio and/or visual broadcasts, software or other data, from a central server to an end point, such as a subscriber site.

The data is preferably routed to the receiver/decoder via an out-of-band channel. The data may equally be routed to the receiver/decoder via an in-band channel.

The receiver/decoder is preferably selected from a plurality of receiver/decoders. Sending data to one of a plurality of receiver/decoders can afford the advantage that the data can be sent more selectively and efficiently than if it were, for example, broadcast to the plurality of receiver/decoders.

The method may further comprise sending further data to a further receiver/decoder selected from the plurality of receiver/decoders, the data routed to the receiver/decoder being different to the further data routed to the further receiver/decoder.

Preferably, the method further comprises selecting a path between a sender of the data and the receiver/decoder, and sending the data along the selected path. In selecting a path between the sender and the or each receiver/decoder, the task of routing the data can more easily be accomplished.

The method preferably further comprises assigning an address to the data, the receiver/decoder to which the data is to be routed being specified by the address, and Internet Protocol (IP) is preferably used to route the data. By assigning an address to the data, the data can more efficiently be routed to the receiver/decoder.

The method preferably further comprises assigning an address to the receiver/decoder, since assigning an address to the receiver/decoder can allow the receiver/decoder to be identified more quickly, and consequently can allow the data to be routed to the receiver/decoder more quickly.

For the avoidance of doubt, the word 'address' as used herein preferably connotes some form of identifier, preferably but not necessarily unique, which can be assigned to a device, to allow both the referencing of the device by another device having a knowledge of the address, and the efficient routing of data to the device.

The address of the receiver/decoder may be statically assigned, as the assignment of a statically assigned address to a receiver/decoder can simplify the task of keeping track of the address of the receiver/decoder for other entities wishing to communicate with the receiver/decoder. The task of assigning the address can also be simplified given the increased simplicity of the addressing scheme.

The phrase 'statically assigned address' as used herein preferably connotes the use of an addressing scheme whereby an address is associated with a device for a substantial period of time, possibly permanently. If a finite period of communication with the device is envisaged, a static address would typically be assigned in advance of, rather than during, such a period, and would persist throughout the period.

In accordance with the above, the address of the receiver/decoder is preferably generated using an identifier of the receiver/decoder, and preferably the identifier relates to a smartcard connected to the receiver/decoder.

By generating the address of the receiver/decoder using an identifier of the receiver/decoder, the process of generating the address does not require input from a second party, and consequently can be conducted more quickly and efficiently. Furthermore, by generating the address of the receiver/decoder using a smartcard identifier, the address of the receiver/decoder can also be obtained by any other entity having a copy of the smartcard identifier without needing to communicate the address of the receiver/decoder from the receiver/decoder to such an entity.

Alternatively, the address of the receiver/decoder may be dynamically assigned.

In contrast to the phrase 'statically assigned address', the phrase 'dynamically assigned address' as used herein preferably connotes the use of an addressing scheme whereby an address is typically assigned to a device only when it is needed, and the address usually then being deassigned when it is no longer needed. Such an addressing scheme is typically characterised by the fact that it allows a plurality of devices to share between them a number of addresses less than the number of devices.

By dynamically assigning the address of the receiver/decoder, less memory may be required to store assigned addresses of receiver/decoders, potentially there being at any time at least one receiver/decoder which does not have an address assigned to it.

The method may further comprise receiving a command to send the data, before an address is assigned to the receiver/decoder, and preferably the address of the receiver/decoder is deassigned after the data has been received by the receiver/decoder.

By assigning the address to the receiver/decoder after receiving a command to send the data, the feature of a dynamic addressing scheme whereby an address can be assigned in response to it being required can be implemented more easily.

The method preferably further comprises selecting the address of the receiver/decoder from a plurality of predetermined addresses.

Furthermore, the plurality of addresses is preferably maintained by a server connected both to a sender of the data and the receiver/decoder. Since the address of the receiver/decoder is selected from a plurality of predetermined addresses, dynamic addressing schemes, generally requiring such a plurality of predetermined addresses, can more efficiently be implemented.

The method may further comprise receiving a broadcast signal at the receiver/decoder, and extracting the address of the receiver/decoder from the broadcast signal. The address extracted from the broadcast signal is preferably associated with an identifier of the receiver/decoder. The term "broadcast signal" as used herein preferably connotes a signal which is being broadcast, either at a physical level - such as a stream of electrical pulses or an electromagnetic wave - or at a more abstract level - such as a data stream embodied in such a pulse or wave. The term "broadcast signal" preferably also includes a signal in any of the above forms which has not yet been broadcast, but will be at some point, such as a programme segment prepared by a broadcast centre for transmission to a plurality of receiver/decoders. The term "broadcast" preferably connotes a transmission from one transmitter to many receivers, but may also connote a transmission which is not selective in terms of who or what receives it.

By extracting the address of the receiver/decoder from a broadcast signal, the address of the receiver/decoder can be assigned without having to route data to the receiver/decoder, such routing being relatively difficult and slow if the receiver/decoder is not yet assigned an address. The method may further comprise inserting the address of the receiver/decoder into a broadcast signal, with corresponding advantages.

The method preferably further comprises storing the address of the receiver/decoder, receiving a request from a client device, the request containing a reference, associating the reference with the stored address, and transmitting the stored address to the client device. The reference is preferably an identifier of the receiver/decoder to which the address is assigned, may be numeric and is preferably a smartcard number. The client device is preferably a conditional access system, such as a Subscriber Authorization System, for example. The client device may be deemed a client merely by virtue of its sending a request.

By storing the address, receiving a request containing a reference from an client device, associating the reference with the stored address, and transmitting the stored address to the client device, a service can thus be provided to translate a reference (usually to a receiver/decoder) into a corresponding address (of the same receiver/decoder). Additionally, most of the effort involved in addressing data to a specific receiver/decoder can be abstracted into a centralized facility, allowing potential savings in cost, complexity and speed in any associated device needing to address data to a receiver/decoder.

By making use of some or all of the various features given above, "push" information services can be implemented, where information is sent to a subscriber when the information provider chooses to send it, instead of, or as well as, on request.

The method preferably further comprises initiating a connection between a sender of the data and the receiver/decoder, and preferably the connection is made using the TCP/IP protocol. This can improve the chances that the receiver/decoder will receive any given data, since such a connection would not be possible until the receiver/decoder was receiving data. Consequently, more flexible services-on-demand can thus be provided to the receiver/decoder.

This important feature is also provided independently. Accordingly, in another aspect a method is provided of sending data from a sender of the data to a receiver/decoder in a broadcast system which broadcasts a signal via a broadcast medium, comprising initiating at the sender a connection between the sender of the data and the receiver/decoder, and sending the data to the receiver/decoder via the connection.

The data is preferably sent from a broadcast centre, so that the broadcast centre can communicate more effectively and more selectively with the receiver/decoders to which it is connected. The data may be sent from other places, however. For example, where there is more than one broadcast network, it is possible to centralize some or all aspects of the interactive system, for example, such that interactive data is provided to receiver/decoders from a central site distinct from the broadcast centre which is connected to the broadcast medium by a router or gateway of some kind.

There can be more scope for centralizing such interactive data compared to other forms of information transmitted to the receiver/decoder, because the information need not be transmitted synchronously or at high speeds (in contrast to the audiovisual data). Other data services may also be provided using TCP/IP or other transmission protocols from points in the network other than the broadcast centre.

In any aspect, the data preferably comprises conditional access data, and preferably comprises an Entitlement Management Message (EMM), although other information may be sent using the TCP/IP connection (such information may include Electronic Programme Guide (EPG) information and other forms of information). The security of the conditional access data can therefore be improved, particularly in comparison to systems which broadcast such data.

The method also preferably comprises sending data from the receiver/decoder in response to the data sent to the receiver/decoder. This feature, particularly in combination with the routing of data, can allow more sophisticated interactive systems to be implemented, for example.

The data sent from the receiver/decoder may comprise a message to acknowledge receipt of the data sent to the receiver/decoder, and may further comprise a message to acknowledge processing of the data sent to the receiver/decoder.

By sending a message to acknowledge receipt of the data sent to the receiver/decoder, unnecessary transmissions of the data can be avoided, increasing the efficiency of the transmissions and therefore reducing the bandwidth consumed. Such unnecessary transmissions are conventionally required because of the possibility that a receiver/decoder might not receive any given data transmission, because the receiver/decoder could be switched off, for example.

Furthermore, in the case of conditional access data, more accurate billing of pay-per-view events is also made possible. Without such recorded delivery of access rights, the situation arises where subscribers may be charged for pay-per-view events which they could not view, for example because their receiver/decoder was not switched on when the appropriate entitlement message or messages were transmitted.

Another advantage is provided that a more accurate record can be kept of when data was received.

The method may further comprise routing data from the receiver/decoder to a destination device, preferably via the broadcast medium. This can enhance the functionality and interactivity of the receiver/decoder.

This important feature is also provided independently. Consequently, in another aspect a method is provided of sending data to a destination device from a receiver/decoder in a broadcast system which broadcasts a signal via a broadcast medium, comprising routing the data to the destination device via the broadcast medium, the broadcast medium preferably being a cable network.

In any aspect the data described above which is sent by or received by the receiver/decoder may comprise any, some or all of an e-mail, text messages, banking details, interactive data, audio data, video data, HTML files, images, subscription details, teletext, timing signals, control signals, general Internet traffic and television programme information.

In a further aspect, there is provided a receiver/decoder adapted to receive routed data from a broadcast medium. The receiver/decoder is preferably also adapted to receive a broadcast signal, preferably via the same broadcast medium.

The receiver/decoder is preferably adapted to receive an address, and is preferably adapted to store the address. The receiver/decoder is preferably further adapted to compare the address with a second address contained in the routed data, and may process the routed data using a method dependent on the result of the comparison. The receiver/decoder may extract the address from the broadcast signal.

The receiver/decoder is preferably adapted to maintain a connection with a sender of the data, may be adapted to initiate the connection, and may be further adapted to receive data via the connection.

The receiver/decoder may be adapted to extract conditional access data from the data, and may be adapted to process the extracted conditional access data. The receiver/decoder may be adapted to send data to a sender of the data in response to the received data, and the data sent to the sender of the data may comprise a message to acknowledge receipt of the data sent to the receiver/decoder.

The receiver/decoder is preferably adapted to route data to a destination device, and is preferably adapted to route the data via a broadcast medium. The receiver/decoder is preferably adapted to receive data sent using Internet Protocol, and is also preferably adapted to send data, preferably also using Internet Protocol.

In yet another aspect, there is provided a receiver/decoder comprising means (typically in the form of a network interface and a processor) for receiving routed data from a broadcast medium.

The means for receiving routed data from a broadcast medium preferably comprises means (typically in the form of a network interface) for receiving data packets from the broadcast medium, and means (typically in the form of a processor) for selecting data packets addressed to the receiver/decoder. The receiver/decoder preferably comprises means (typically in the form of a tuner and/or demultiplexer) for receiving a broadcast signal

The receiver/decoder preferably comprises means (typically in the form of a network interface) for receiving an address, and preferably comprises means (typically in the form of a memory) for storing the address. The receiver/decoder preferably comprises means (typically in the form of a processor) for comparing the address with a second address contained in the routed data, and may comprise means (typically in the form of a processor) for processing the routed data using a method dependent on the result of the comparison. The receiver/decoder may comprise means (typically in the form of a processor) for extracting the address from the broadcast signal.

The receiver/decoder preferably comprises means (typically in the form of a network interface and processor) for maintaining a connection with a sender of the data, and may comprise means (typically in the form of a network interface and processor) for initiating the connection.

The receiver/decoder may further comprise means (typically in the form of a processor) for extracting conditional access data from the data, and may comprise means (typically in the form of a smartcard and/or processor) for processing the extracted conditional access data. The receiver/decoder may comprise means (typically in the form of a processor and network interface) for sending data to a sender of the data in response to the received data. The means for sending data to a sender of the data may further comprise means (typically in the form of a processor and network interface) for sending a message to acknowledge receipt of the data sent to the receiver/decoder.

The receiver/decoder preferably comprises means (typically in the form of a processor and network interface) for routing data to a destination device. The receiver/decoder preferably further comprises means (typically in the form of a network interface and/or processor) for receiving data sent using Internet Protocol, and preferably further comprises a TCP/IP stack. The receiver/decoder also preferably further comprises means (typically in the form of a network interface and/or processor) for sending data using Internet Protocol.

In a further aspect, there is provided a broadcast centre adapted to route data to a receiver/decoder via a broadcast medium. The broadcast centre preferably also is adapted to broadcast a signal via the broadcast medium.

The broadcast centre is preferably adapted to select the receiver/decoder from a plurality of receiver/decoders, and is preferably adapted to select a path to the receiver/decoder and send data along the selected path. The broadcast centre may be adapted to assign an address to the data to identify the receiver/decoder to which the data is to be routed.

The broadcast centre may be adapted to assign an address to the receiver/decoder, and may be adapted to assign the address either statically or dynamically. The broadcast centre may be adapted to generate the address using an identifier of the receiver/decoder, such as a smartcard identifier. The broadcast centre may be adapted to receive a command to send the data, and may be adapted to assign an address to the receiver/decoder after receiving the command. The broadcast centre may be adapted to insert the address of the receiver/decoder into a broadcast signal.

The broadcast centre may be adapted to store the address of the receiver/decoder, and may be adapted to receive a request from a client device. The broadcast centre may further be adapted to associate a reference contained in the request with the stored address, and may be adapted to transmit the stored address to the client device. The broadcast centre is preferably adapted to route conditional access data to the receiver/decoder.

The broadcast centre is preferably further adapted to maintain a connection with the receiver/decoder, and may be adapted to initiate the connection.

The broadcast centre is preferably adapted to receive data from the receiver/decoder, and may be further adapted to receive from the receiver/decoder a message acknowledging receipt of the data sent to the receiver/decoder. The broadcast centre is preferably further adapted to process the acknowledgement message.

The broadcast centre is preferably adapted to receive conditional access data, and may be adapted to process the conditional access data. The broadcast centre may be adapted to broadcast conditional access data.

In a yet further aspect, there is provided a broadcast centre comprising means (typically in the form of a network interface and a processor) for routing data to a receiver/decoder via a broadcast medium. The broadcast centre preferably comprises means (typically in the form of a transmitter) for broadcasting a signal via the broadcast medium.

The means for routing data to a receiver/decoder via a broadcast medium preferably comprises means (typically in the form of a processor) for addressing the data to the receiver/decoder, and means (typically in the form of a network interface) for outputting the data to the broadcast medium in a form suitable for routing to the receiver/decoder.

The broadcast centre preferably comprises means (typically in the form of a processor) for selecting the receiver/decoder from a plurality of receiver/decoders, and preferably comprises means (typically in the form of a processor) for selecting a path to the receiver/decoder and sending data along the selected path. The broadcast centre may comprise means (typically in the form of a processor) for assigning an address to the data to identify the receiver/decoder to which the data is to be routed.

The broadcast centre may comprise means (typically in the form of a processor) for assigning an address to the receiver/decoder, and may comprise means (typically in the form of a processor) for assigning the address either statically or dynamically. The broadcast centre may comprise means (typically in the form of a processor) for generating the address using an identifier of the receiver/decoder, such as a smartcard identifier. The broadcast centre may comprise means (typically in the form of a network interface) for receiving a command to send the data, and may comprise means (typically in the form of a processor) for assigning an address to the receiver/decoder after receiving the command. The broadcast centre may comprise means (typically in the form of an output) for inserting the address of the receiver/decoder into a broadcast signal.

The broadcast centre may comprise means (typically in the form of a memory) for storing the address of the receiver/decoder, and may comprise means (typically in the form of a network interface) for receiving a request from a client device. The broadcast centre may further comprise means (typically in the form of a processor) for associating a reference contained in the request with the stored address, and may comprise means (typically in the form of a network interface) for transmitting the stored address to the client device. The broadcast centre preferably comprises means (typically in the form of a network interface) for routing conditional access data to the receiver/decoder.

The broadcast centre preferably further comprises means (typically in the form of a processor and/or network interface) for maintaining a connection with the receiver/decoder, and may comprise means (typically in the form of a processor and/or network interface) for initiating the connection. The broadcast centre preferably comprises means (typically in the form of a network interface) for routing the data via a broadcast medium.

The broadcast centre preferably comprises means (typically in the form of a network interface) for receiving data from the receiver/decoder, the means for receiving data preferably further comprising means (typically in the form of a network interface) for receiving a message acknowledging receipt of the data sent to the receiver/decoder. The broadcast centre preferably further comprises means (typically in the form of a processor) for processing the acknowledgement message.

The broadcast centre preferably comprises means (typically in the form of a network interface) for receiving conditional access data, and may comprise means (typically in the form of a processor) for processing the conditional access data.

In a further aspect there is provided a conditional access system adapted to route conditional access data to a receiver/decoder.

The conditional access system may be adapted to insert conditional access data into a broadcast signal. The conditional access system may further be adapted to broadcast conditional access data to the receiver/decoder.

The conditional access system is preferably adapted to select the receiver/decoder from a plurality of receiver/decoders, and is preferably adapted to select a path to the receiver/decoder and send data along the selected path. The conditional access system may be adapted to assign an address to the data to identify the receiver/decoder to which the data is to be routed.

The conditional access system may be adapted to assign an address to the receiver/decoder, and may be adapted to assign the address either statically or dynamically. The conditional access system may be adapted to generate the address using an identifier of the receiver/decoder, such as a smartcard identifier. The conditional access system may be adapted to receive a command to send the data, and may be adapted to assign an address to the receiver/decoder after receiving the command. The conditional access system may be adapted to insert the address of the receiver/decoder into a broadcast signal.

The conditional access system may be adapted to store the address of the receiver/decoder, and may be adapted to receive a request from a client device. The conditional access system may further be adapted to associate a reference contained in the request with the stored address, and may be adapted to transmit the stored address to the client device.

The conditional access system is preferably adapted to maintain a connection with the receiver/decoder, and may be adapted to initiate the connection.

The conditional access system is preferably adapted to receive data from the receiver/decoder, and may be further adapted to receive from the receiver/decoder a message acknowledging receipt of the data sent to the receiver/decoder. The conditional access system is preferably further adapted to process the acknowledgement message.

The conditional access system is preferably adapted to receive conditional access data, and may be adapted to process the conditional access data. The conditional access system may be adapted to broadcast conditional access data.

In another aspect there is provided a conditional access system comprising means (typically in the form of a processor and network interface) for routing conditional access data to a receiver/decoder.

The means for routing conditional access data to a receiver/decoder preferably comprises means (typically in the form of a processor) for addressing the data to the receiver/decoder, and means (typically in the form of a network interface) for outputting the data in a form suitable for routing to the receiver/decoder. The means for outputting the data in a form suitable for routing to the receiver/decoder is preferably adapted to send data via a broadcast medium.

The conditional access system preferably also comprises means (typically in the form of a interface) for inserting conditional access data in a broadcast signal. The conditional access system may further comprise means for broadcasting conditional access data to the receiver/decoder.

The conditional access system preferably comprises means (typically in the form of a processor) for selecting the receiver/decoder from a plurality of receiver/decoders, and preferably comprises means (typically in the form of a processor) for selecting a path to the receiver/decoder and sending data along the selected path. The conditional access system may comprise means (typically in the form of a processor) for assigning an address to the data to identify the receiver/decoder to which the data is to be routed.

The conditional access system may comprise means (typically in the form of a processor) for assigning an address to the receiver/decoder, and may comprises means (typically in the form of a processor) for assigning the address either statically or dynamically. The conditional access system may comprise means (typically in the form of a processor) for generating the address using an identifier of the receiver/decoder, such as a smartcard identifier. The conditional access system may comprise means (typically in the form of a network interface) for receiving a command to send the data, and may comprise means (typically in the form of a processor) for assigning an address to the receiver/decoder after receiving the command. The conditional access system may comprise means (typically in the form of an output) for inserting the address of the receiver/decoder into a broadcast signal.

The conditional access system may comprise means (typically in the form of a memory) for storing the address of the receiver/decoder, and may comprise means (typically in the form of a network interface) for receiving a request from a client device. The conditional access system may further comprise means (typically in the form of a processor) for associating a reference contained in the request with the stored address, and may comprise means (typically in the form of a network interface) for transmitting the stored address to the client device.

The conditional access system preferably further comprises means (typically in the form of a processor and/or network interface) for maintaining a connection with the receiver/decoder, and may comprise means (typically in the form of a processor and/or network interface) for initiating the connection. The conditional access system preferably comprises means (typically in the form of a network interface) for routing the data via a broadcast medium.

The conditional access system preferably comprises means (typically in the form of a network interface) for receiving data from the receiver/decoder, the means for receiving data preferably further comprising means (typically in the form of a network interface) for receiving a message acknowledging receipt of the data sent to the receiver/decoder. The conditional access system preferably further comprises means (typically in the form of a processor) for processing the acknowledgement message.

The conditional access system preferably comprises means (typically in the form of a network interface) for receiving conditional access data, and may comprise means (typically in the form of a processor) for processing the conditional access data.

In another aspect there is provided a broadcast centre, comprising the aforesaid conditional access system.

In a yet further aspect there is provided a server, adapted to store an address of a receiver/decoder. The server is preferably adapted to receive a request from a client device. The server may further be adapted to associate a reference contained in the request with the stored address, and may be adapted to transmit the stored address to the client device. The server is preferably adapted to route conditional access data to the receiver/decoder.

The server is preferably adapted to store an identifier of the receiver/decoder, and is preferably further adapted to match the identifier with the stored identifier, and retrieve the stored address corresponding to the stored identifier.

In a further aspect there is provided a server, comprising means (typically in the form of a memory) for storing an address of a receiver/decoder, and preferably means (typically in the form of a network interface) for receiving a request from a client device. The server may comprise means (typically in the form of a processor) for associating a reference contained in the request with the stored address, and may comprise means (typically in the form of a network interface) for transmitting the stored address to the client device.

The server preferably further comprises means (typically in the form of a memory) for storing an identifier of the receiver/decoder, and preferably the means for associating the identifier with the stored address further comprises means (typically in the form of a processor) for matching the identifier with the stored identifier, and means (typically in the form of a processor) for retrieving the stored address corresponding to the stored identifier. The server is preferably incorporated in a broadcast centre, and is preferably attached to a network within the broadcast centre. The server may alternatively be incorporated in a network server or a conditional access system.

In another aspect, there is provided a packet adapted to be routed to a receiver/decoder, comprising a network address of the receiver/decoder and a portion of data. The data is preferably conditional access data, and may be an Entitlement Management Message.

The term "packet" as used herein preferably connotes a self-contained unit of data embodied in an arbitrary form, such as a series of values stored in a computer memory, or as an electrical signal traversing a network. An IP datagram would be a typical example of a packet.

In a further aspect, there is provided a packet adapted to be routed to a broadcast centre, comprising a network address of the broadcast centre and a portion of data. The data may be conditional access data, or may be a message to acknowledge receipt of data by a receiver/decoder. The data may further comprise an identifier of the receiver/decoder, and may comprise a smartcard number.

In the above two aspects, the data may alternatively comprise interactive data, audio data, video data, or other types of data.

In another aspect, there is provided a carrier signal embodying a packet as defined in the above two aspects.

In a further aspect there is provided a broadcast system, comprising a broadcast centre as defined above, a receiver/decoder also as defined above, and a router adapted to route data between the broadcast centre and the receiver/decoder.

The broadcast system may further comprise a server as defined above, and preferably further comprises a conditional access system as defined above.

In a further aspect, there is provided a computer program product adapted to modify a receiver/decoder to receive routed data, preferably via a broadcast medium. The computer program product is preferably further adapted to modify a receiver/decoder to store an address, and may be adapted to store an address in a receiver/decoder. The computer program product may be adapted to modify a receiver/decoder to extract an address of the receiver/decoder from a broadcast signal, may be adapted to modify a receiver/decoder to send data to a destination device, and may be adapted to modify a receiver/decoder to maintain a connection with a destination device.

In another aspect, there is provided a computer program product adapted to modify a conditional access system to route conditional access data to a receiver/decoder, preferably via a broadcast medium.

In a yet further aspect, there is provided a carrier signal embodying the computer program products defined above, and in another aspect, there is provided a computer readable medium embodying the computer program products defined above.

In the aspects of the invention relating to conditional access data, the conditional access data preferably comprises pay-per-view authorization. Such authorization, for example, includes the rights to watch certain events transmitted at certain times.

TCP/IP-based and other connections between two or more receiver/decoders with or without intervention by a central site are also possible, amongst other things for multiuser gaming, email, chat, voice conferencing, video conferencing and other interactive services.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

The invention also provides a signal embodying a computer program for carrying out any of the methods described herein and/or for embodying any of the apparatus features described herein, a method of transmitting such a signal, and a computer product having an operating system which supports a computer program for carrying out any of the methods described herein and/or for embodying any of the apparatus features described herein.

In another aspect, a method is provided substantially as herein described.

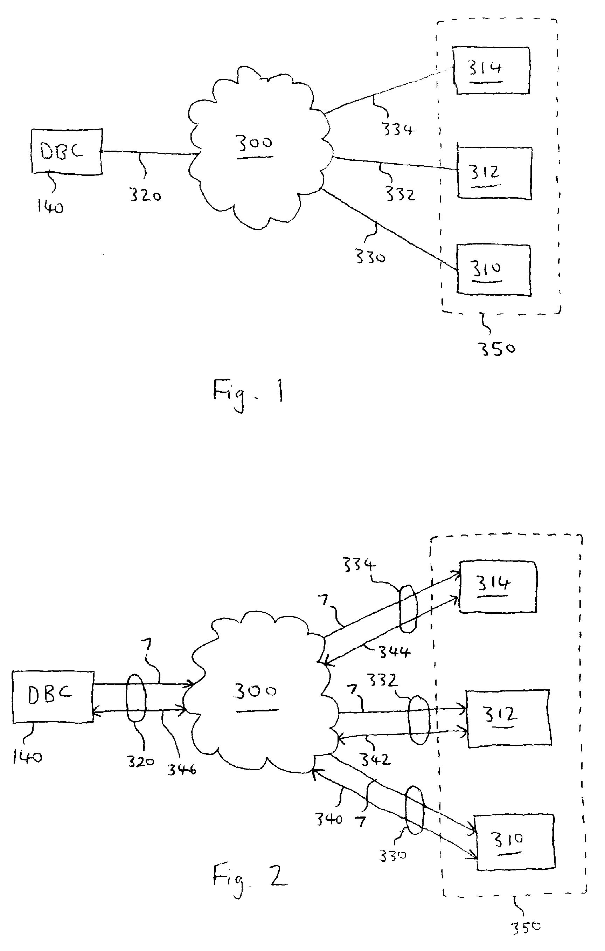

In further aspects, a receiver/decoder, a broadcast centre, a conditional access system, a broadcast system, a server, a packet, a carrier signal, a computer program product and a computer readable medium are independently provided, substantially as herein described, with reference to Figures 1 to 15.

Any feature of any aspect of the invention may be combined with any feature of any other aspect of the invention, as appropriate.

Preferred features of the present invention will now be described, purely by way of example, with reference to the accompanying drawings, in which: -
Figure 1 shows an overview of a typical digital television system;
Figure 2 shows an overview of a typical cable digital television system;
Figure 3 shows the structure of the cable digital television system in more detail;
Figure 4 shows the structure of Figure 3 in more detail;
Figure 5 is a block diagram of a receiver/decoder;
Figure 6 is a block diagram of a second receiver/decoder;
Figure 7 shows the software and hardware architecture of a receiver/decoder;
Figure 8 shows an overview of a conditional access system;
Figure 9 shows the structure of an Entitlement Management Message;
Figure 10 shows the structure of a Subscriber Authorization System;
Figure 11 is a schematic of an Address Server;
Figure 12 is a schematic of an EMM Communications Manager;
Figure 13 shows the typical route of an EMM and the corresponding confirmation;
Figure 14 shows an alternative route of an EMM and the corresponding confirmation; and
Figure 15 shows a further embodiment of the Subscriber Authorization System.

### Digital television system

An overview of a digital television system 1 is shown in Figure 1. The system uses the known MPEG-2 compression system to transmit compressed digital signals via a broadcast medium 300 from a digital broadcasting centre (DBC) 140 to a plurality of subscriber sites 350, which includes individual subscriber sites 310, 312, 314.

Each subscriber site 310, 312, 314 is connected to the broadcast medium via a linkage 330, 332, 334 respectively. The linkages 330, 332, 334 are typically coaxial cable connections between curbside distribution points (DP) and the subscriber sites 310, 312, 314. In variants of the preferred embodiment, the linkages 330, 332, 334 comprise more than one physical channel, and may comprise, for example, both a conventional cable connection and a standard telephone line. The broadcast centre is connected to the broadcast medium by a linkage 320.

In a preferred embodiment, and with reference to Figure 2, the broadcast medium 300 is a cable television distribution network comprising a Hybrid Fibre Coax (HFC) network, the HFC network providing enhanced capacity and flexibility with respect to traditional coaxial cable networks. Other types of network are, of course, possible, such as Passive Optical Networks (PON), or SMATV systems enhanced with a satellite-based interaction channel.

Each linkage 330, 332, 334 provides two data channels between the subscriber sites 310, 312, 314 and the cable network. A unidirectional data channel 7, known as the "transport channel", carries the digital television signals broadcast by the broadcast centre 140 to the subscriber sites 310, 312, 314, and "out-of-band" (OOB) bidirectional data channels 340, 342, 344 carry signalling and other data between the subscriber sites 310, 312, 314 and the broadcast centre 140. The out-of-band data is communicated between the broadcast centre 140 and the cable network 300 via a high-capacity bidirectional linkage 346.

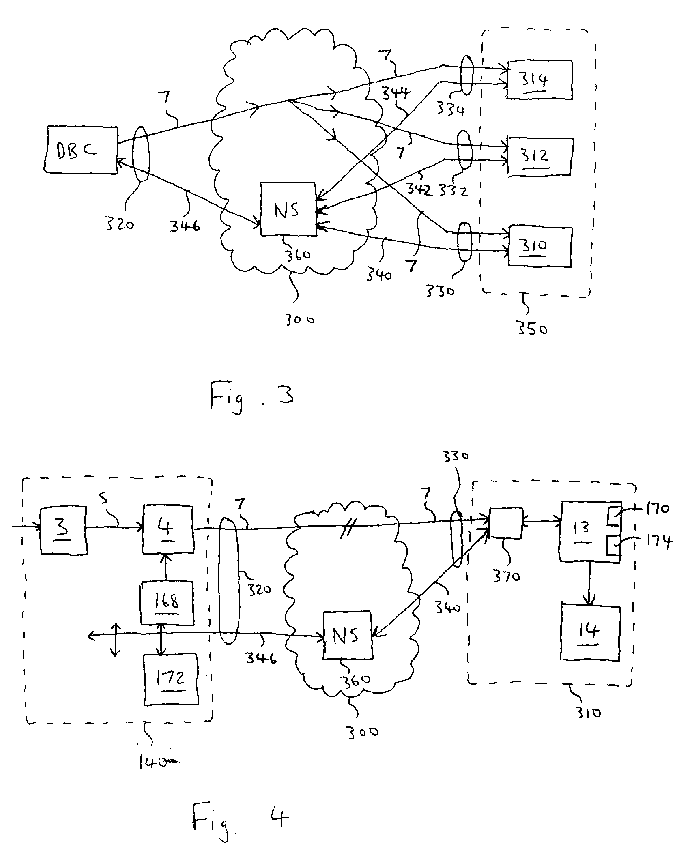

With reference to Figure 3, the internal structure of the cable network 300 will now be described in more detail.

Within the cable network, the unidirectional broadcast channel 7 and the bidirectional out-of-band channels 340, 342, 344 are routed independently, despite having the same start and end points (the DBC 140 and the linkages 330, 332, 334 respectively). In other words, the broadcast channel 7 and out-of-band channels 340, 342, 344 are treated as logically independent by the cable network, despite being physically coincident in many places.

Given the different demands imposed by the two different types of channel with regard to latency, bandwidth required, and the like, two separate sub-networks are provided in the cable network, each sub-network being dedicated to one of the channel types (unidirectional broadcast channel or bidirectional out-of-band channel). In a variant of the preferred embodiment, a unified network is provided, using ATM technology, for example, to route and forward both types of channel transparently and without the need for separate sub-networks.

As can be seen in Figure 3, the sub-network carrying the broadcast data channel 7, shown in the upper part of the cable network 300, is relatively simple, and merely forwards the broadcast data to each subscriber site 310, 312, 314.

The sub-network carrying the out-of-band channels 340, 342, 344, shown in the lower part of the cable network 300, is more complicated, however. A "Network Server" 360 is provided within the cable network, to which Server all of the out-of-band channels 340, 342, 344 and the linkage to the broadcast centre 346 are connected.

In essence, the Network Server has two main functions: allowing data to be routed from the broadcast centre 140 to an individual subscriber site 310 and *vice versa,* and allowing network connections to be made between the broadcast centre and individual subscriber sites. A more detailed description of the functionality of the Network Server and its possible applications is given later. The connections between the Network Server 360 and the subscriber sites or broadcast centre may include any number of repeaters, multiplexers, demultiplexers and routers.

In conjunction with the Network Server, an Address Server (not shown) and a means for generating addresses for receiver/decoders (not shown) are also provided. These are also described later in more detail.

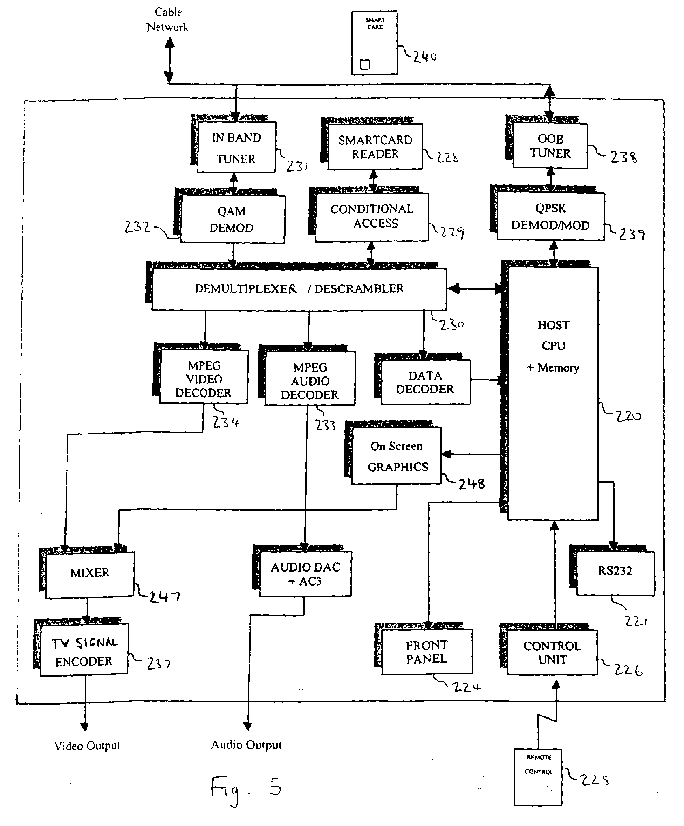

Figure 4 shows the digital broadcast centre 140 and a subscriber site 310 in more detail. Within the broadcast centre 140, an MPEG-2 compressor 3 in the broadcast centre 140 receives a digital signal stream (typically a stream of video signals) and compresses the signal stream (or reduces the bit rate). The compressor 3 is connected to a multiplexer and scrambler 4 by linkage 5.

The multiplexer and scrambler 4 receives a plurality of further input signals, assembles the transport stream and transmits compressed digital signals into the transport channel 7 for transmission via the cable network 300 to the plurality of subscriber sites 350, of which the subscriber site 310 forms part.

The transport channel 7 and out-of-band channel 340 are transformed into a single electrical signal in the subscriber site 310 and *vice versa* by a combiner/splitter 370. The combiner/splitter may alternatively be provided at a location remote from the subscriber site.

The electrical signal comprising the transmitted digital signal is then fed into an integrated receiver/decoder 13 owned or rented by the end user and connected to the end user's television set 14. The receiver/decoder 13 decodes the compressed MPEG-2 signal into a television signal for the television set 14. Although a separate receiver/decoder is shown in Figure 3, the receiver/decoder may also be part of an integrated digital television. As used herein, the term "receiver/decoder" includes a separate receiver/decoder, such as a set-top box, and a television having a receiver/decoder integrated therewith.

A back-channel is provided to allow the receiver/decoder 13 to send data to the broadcast centre. In Figure 4, the back-channel is the out-of-band channel 340, but it may take other forms, such as a telephone connection to communications servers in the broadcast centre, or an interactive channel in the broadcast frequency range.

Data sent by subscriber sites 350 to the Network Server 360 is carried by the high capacity bidirectional linkage 346 into the broadcast centre 140, where it is then routed to the appropriate device. As will be described later, the use of an addressing system for the data allows several devices to be networked and connected to the same linkage 346.

In a multichannel system, the multiplexer and scrambler 4 handles audio and video information received from a number of parallel sources and broadcasts the information along a corresponding number of channels in the broadcast medium 300. In addition to audiovisual information, messages or applications or any other sort of digital data may be introduced in some or all of these channels and interleaved with the transmitted digital audio and video information.

A conditional access system is connected to the multiplexer and scrambler 4 and the receiver/decoder 13, and its functionality is distributed between a centrally-located portion 168 in the broadcast centre and a peripheral portion 170 in the receiver/decoder. The conditional access system enables the end user to access digital television broadcasts from one or more broadcast suppliers. A smartcard, capable of deciphering messages relating to commercial offers (that is, one or several television programmes sold by the broadcast supplier), can be inserted into the receiver/decoder 13. Using the decoder 13 and smartcard, the end user may purchase commercial offers in either a subscription mode or a pay-per-view mode.

Typically, scrambled data is transmitted together with a control word, the control word itself being encrypted by a so-called exploitation key and transmitted in encrypted form. Transmission of scrambled data in this way is well known in the field of pay TV systems.

The conditional access system is described in more detail below.

### Receiver/decoder

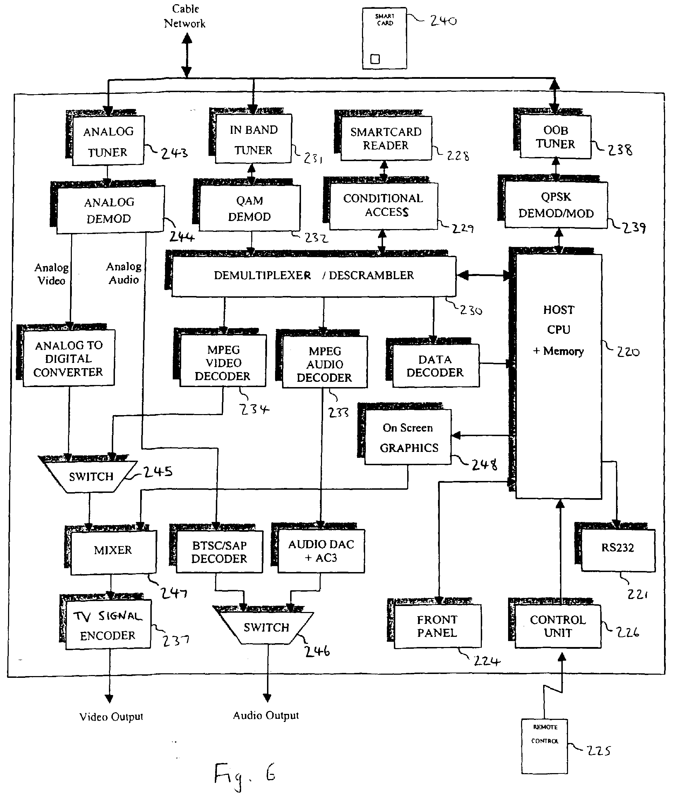

Referring to Figure 5, the various elements of receiver/decoder 13 will now be described in terms of functional blocks.

The receiver/decoder 13, which may be, for example, a digital set-top box (DSTB), is adapted for use in a cable network. With a relatively small modification, however, the receiver/decoder may be used in other types of broadcast system, such as a satellite system for example.

The receiver/decoder comprises a central processor 220 including associated memory elements and adapted to receive input data from a serial interface 221, switch contacts 224 on the front panel of the decoder, and a cable modem, comprising an out-of-band (OOB) tuner 238 and QPSK demodulator/modulator 239. In a variant of the preferred embodiment, the central processor 220 can also receive input data from a conventional modem connected to a telephone line, and in a further variant, input data can be received from a parallel port.

The cable modem allows data to be sent as well as received by the central processor 220 using out-of-band (OOB) channels in the cable connection, and can serve as a network interface for the receiver/decoder. The modem receives data such as control and access messages, application downloads, and so on from a forward data channel (FDC), and transmits return data on a reverse data channel (RDC). On power-up, the receiver/decoder hunts for the forward data channel, in accordance with a predefined hunt algorithm, and then establishes the reverse data channel (RDC), the power and frequency of which is indirectly controllable by the Network Server 360 or other receiving equipment at the head-end. The cable modem typically operates at 1.544 Mbps in both directions, and operates within a 70-130 MHz frequency range for the forward data channel, and 5-40 MHz for the reverse data channel.

In summary, it is noted that the receiver/decoder can both receive and transmit routed IP traffic via the same link used to receive broadcast data.

The receiver/decoder is additionally adapted to receive input data from an infra-red remote control 225 via a control unit 226 and also possesses a smartcard reader 228 adapted to read a subscription, or "daughter", smartcard 240. The subscription smartcard reader 228 engages with an inserted subscription card 240 and with a conditional access unit 229 to supply the necessary control word to a demultiplexer/descrambler 230 to enable the encrypted broadcast signal to be descrambled.

The digital decoder includes a conventional in-band tuner 231 and a QAM demodulator 232 to receive and demodulate the cable transmission before it is demultiplexed and descrambled by the unit 230. Attached to the demultiplexer/descrambler 230 is an MPEG video decoder 234, an MPEG audio decoder 233 and a data decoder, which is in turn connected to the central processor 220. The central processor 220 is also connected directly to the demultiplexer/descrambler 230, and is able to control its operation.

The output of the MPEG video decoder 234 is subsequently mixed with the on-screen graphics produced by the unit 248, and then output through the television signal encoder 237 to the attached television 14 (not shown). The television signal encoder 237 is capable of producing an output signal in accordance with the local broadcast standard (such as NTSC, PAL or SECAM, for example) to allow the output of the receiver/decoder to be viewed without adjustment on a standard television set.

With reference to Figure 6, in a variant of the preferred embodiment, analogue decoding components are added to the receiver/decoder to allow it to decode and display both analogue and digital television signals. Such a receiver/decoder is more complex, and therefore typically more expensive, than the digital-only receiver/decoder, but provides compatibility with existing cable networks carrying both analogue and digital television content.

The analogue decoding components operate independently of the digital decoding components, and provide a second set of audio and video outputs. Two switches 245, 246, acting under the control of the central processor 220, are provided to select between the analogue and digital output. The decoding of an analogue signal, employing components such as the analogue tuner 243 and analogue demodulator 244.

As used in this description, an application is preferably a piece of computer code for controlling high level functions of preferably the receiver/decoder 13. For example, when the end user positions the focus of remote control 225 on a button object seen on the screen of the television set 14 and presses a validation key, the instruction sequence associated with the button is run.

### Architecture of receiver/decoder

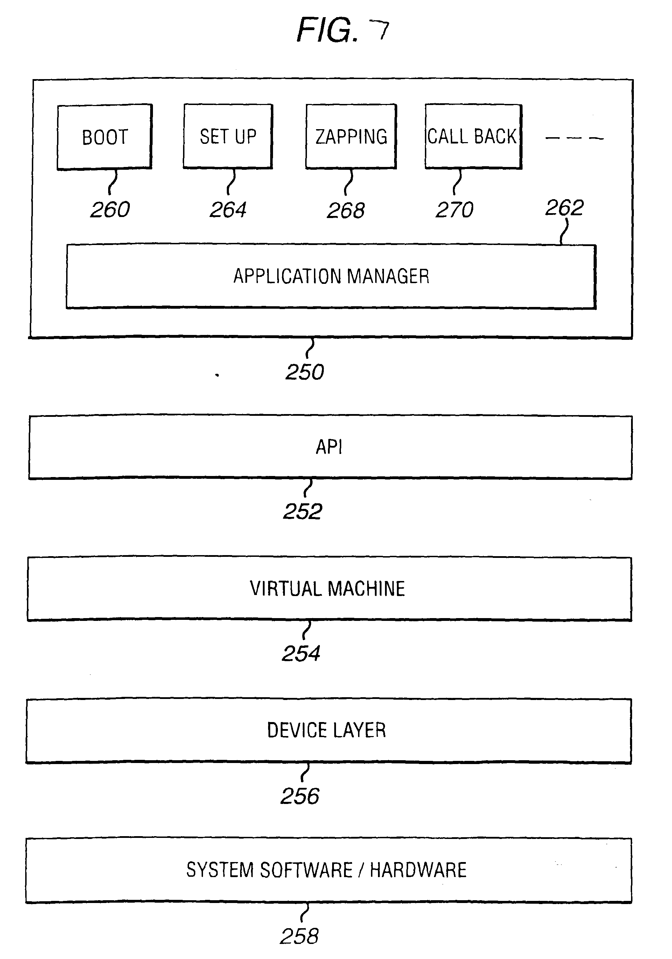

The receiver/decoder contains five software layers, organized so that the software can be implemented in any receiver/decoder and with any operating system. Referring to Figure 7, the various software layers are Application Layer 250, Application Programming Interface (API) layer 252, Virtual Machine Layer 254, Device Layer 256 and System Software/Hardware Layer 258.

The Application Layer 250 encompasses applications that are either resident in or downloaded to the receiver/decoder. They may be interactive applications used by customers, written in, for example, Java, HTML, MHEG-5 or other languages, or they may be applications used by the receiver/decoder to run such applications. This layer is based on a set of open Application Programming Interfaces (APIs) provided by the Virtual Machine layer. This system allows applications to be downloaded to flash or RAM memory in the receiver/decoder on-the-fly or on demand. The application code can be transmitted in compressed or uncompressed format using protocols such as Data Storage Media Command and Control (DSMCC), Network File Server (NFS) or other protocols.

Interactive applications are applications that the user interacts with, for example, to obtain products and services, such as electronic program guides, telebanking applications and games.

The API layer 252 provides high-level utilities for interactive application development. It includes several packages that make up this high-level API. The packages provide all the functionality necessary to run interactive applications. The packages are accessible by the applications.

In a preferred embodiment the API is adapted to run applications written in the Java programming language. Furthermore, it can interpret HTML and other formats, such as MHEG-5. Besides these interpreters, it also includes other packages and service modules that are detachable and extensible as requirements dictate.

The Virtual Machine layer 254 is composed of language interpreters and various modules and systems. It consists of everything necessary to receive and execute interactive applications in the receiver/decoder.

The Device Interface layer 256 includes a Device Manager and devices. Devices are software modules which consist of the logical resources necessary for management of external events and physical interfaces. The Device Layer manages communication channels between drivers and applications and provides enhanced error exception checking. Some examples of managed devices are: card readers, modems, network, PCMCIA (Personal Computer Memory Card International Association), LED display and so on. Programmers do not have to deal with this layer directly, since the API layer controls the devices from above.

The System Software/Hardware layer 258 is provided by the manufacturer of the receiver/decoder. Because of the modularity of the system and because services supplied by the OS (such as event scheduling and memory management) are part of the Virtual Machine, the higher layers are not tied to a particular real-time operating system (RTOS) or to a particular processor.

A TCP/IP stack is implemented in the receiver/decoder in accordance with well-established networking practices. In the context of the cable network discussed herein, the TCP/IP stack is of particular importance, as it assists data to be routed to and from the receiver/decoder. A suitable interface is provided in the API layer to allow applications to communicate with the broadcast centre, and to allow applications to receive data transmitted by the broadcast centre using the TCP/IP protocol in accordance with known networking techniques. Other protocols may be used in variants of the preferred embodiment.

The significance and importance of being able to route data will be described in more detail below.

### Conditional Access System

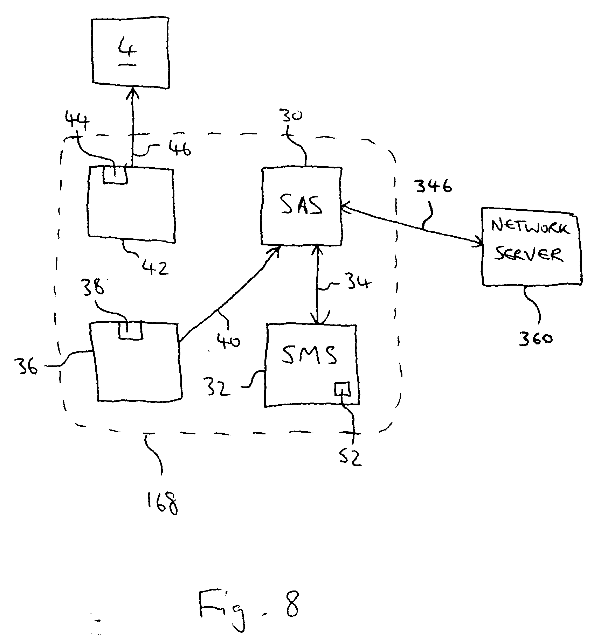

With reference to Figure 8, in overview, the centralized portion of the conditional access system 168 includes a Subscriber Authorization System (SAS) 30; one or more Subscriber Management Systems (SMS) 32; a first encryption unit 42 connected to the multiplexer and scrambler 4 by linkage 46, and a second encryption unit 36 connected to the SAS 30 by linkage 40. Amongst its other functions, the conditional access system 168 determines the conditions and encryption keys which are to be applied to a given transmission.

Before being broadcast, programmes are scrambled by the multiplexer and scrambler 4 using a control word generated within the multiplexer and scrambler 4.

In addition, access criteria are generated, indicating how the programme is commercialised. The programme may be commercialised in either one of a number of "subscription" modes and/or one of a number of "Pay Per View" (PPV) modes or events. In the subscription mode, the end user subscribes to one or more commercial offers, or "bouquets", thus getting the rights to watch every channel inside those bouquets. In the Pay Per View mode, the end user is provided with the capability to purchase events as he wishes.

An Entitlement Control Message (ECM) is a data packet of a predetermined size and format, containing the control word and access criteria, which is sent in relation with one scrambled program, and is the means by which the control word and access criteria are sent to the receiver/decoder.

In order to create an encrypted ECM for a particular program, the multiplexer and scrambler 4 first transmits the access criteria and control word to the first encrypting unit. The first encrypting unit then generates the appropriate ECM using the access criteria and control word, encrypts the ECM, and transmits back the encrypted ECM to the multiplexer and scrambler 4. The encrypted ECM is then inserted into the MPEG-2 stream by the multiplexer and scrambler 4 for subsequent broadcast to the receiver/decoder.

Each service broadcast by a broadcast supplier in a data stream comprises a number of distinct components; for example a television programme includes a video component, an audio component, a sub-title component and so on. Each of these components of a service is individually scrambled and encrypted for subsequent broadcast. In respect of each scrambled component of the service, a separate ECM is required.

After all of the programme components have been scrambled, they and the encrypted ECMs are transmitted as electric signals to the cable network 300.

The first encrypting unit is in the form of ciphering units 42 utilising "mother" smartcards 44. Similarly, the second encrypting unit is in the form of ciphering units 36 utilising "mother" smartcards 38. A further smartcard, a "daughter" smartcard 240, is provided in the receiver/decoder 13.

The smartcards contain confidential information from one or more commercial operators. The "mother" smartcard encrypts different kinds of messages and "daughter" smartcards decrypt the messages, if they have the rights to do so.

As used herein, the term "smartcard" includes, but not exclusively so, any chip-based card device, or object of similar function and performance, possessing, for example, microprocessor and/or memory storage. Included in this term are devices having alternative physical forms to a card, for example key-shaped devices are often used in TV decoder systems.

The receiver/decoder receives the broadcast signal and extracts the MPEG-2 data stream. If a programme is scrambled, the receiver/decoder 13 extracts the corresponding ECM from the MPEG-2 stream and passes the ECM to the "daughter" smartcard 240 of the end user. This slots into a housing in the receiver/decoder 13. The daughter smartcard 240 controls whether the end user has the right to decrypt the ECM and to access the programme. If not, a negative status is passed to the receiver/decoder 13 to indicate that the programme cannot be descrambled. If the end user does have the rights, the ECM is decrypted and the control word extracted. The receiver/decoder 13 can then descramble the programme using this control word. The MPEG-2 stream is decompressed and translated into a video signal for onward transmission to television set 14.

If the programme is not scrambled, no ECM will have been transmitted with the MPEG-2 stream and the receiver/decoder 13 decompresses the data and transforms the signal into a video signal for transmission to television set 14.

The ECMs are decrypted using an equivalent to the exploitation key stored on the "daughter" smartcard 240 in the receiver/decoder 13. The exploitation key is periodically changed, and a paid-up subscriber will receive, for example, in a monthly transmission from the broadcast centre the exploitation key necessary to decrypt the encrypted control word so as to permit viewing of the transmission. This process is described in more detail below.

The Subscriber Management System (SMS) 30 includes a database 52 which manages, amongst others, all of the end user files, commercial offers (such as tariffs and promotions), subscriptions, PPV details, and data regarding end user consumption and authorization. The SMS may be physically remote from the SAS.

The SMS 32 transmits messages to the SAS 30 which imply modifications to or creations of Entitlement Management Messages (EMMs) to be transmitted to end users. The SMS 32 also transmits messages to the SAS 30 which imply no modifications or creations of EMMs but imply only a change in an end user's state (relating to the authorization granted to the end user when ordering products or to the amount that the end user will be charged). The SAS 30 also sends messages (typically requesting information such as call-back information or billing information) to the SMS 32, so that it will be apparent that communication between the two is two-way.

As described above, the SAS 30 and SMS 32 form part of a conditional access system, but can themselves be considered as conditional access systems, either individually, or in combination. Further conditional access systems may also be provided, either within or external to the broadcast centre.

### Entitlement Management Messages (EMMs)

The EMM is a message dedicated to an individual end user (subscriber), or a group of end users, only, in contrast with an ECM, which is dedicated to one scrambled programme only or a set of scrambled programmes if part of the same commercial offer.

Various specific types of EMM are possible. Individual EMMs are dedicated to individual subscribers, and are typically used in the provision of Pay Per View services; these contain the group identifier and the position of the subscriber in that group. So-called "Group" subscription EMMs are dedicated to groups of, say, 256 individual users, and are typically used in the administration of some subscription services. Audience EMMs are dedicated to entire audiences. An "audience" is the totality of subscribers having smartcards which bear the same Operator Identifier (OPI). Finally, a "unique" EMM is addressed to the unique identifier of the smartcard.

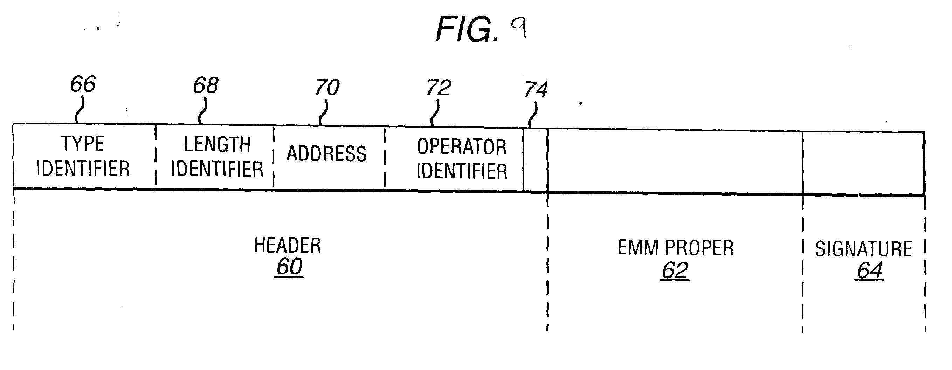

The general form of an EMM which is used in the preferred embodiment is now described with reference to Figure 9. The EMM, which is implemented as a series of digital data bits, comprises a header 60, the EMM proper 62, and a signature 64. The header 60 in turn comprises a type identifier 66 to identify the type of EMM, a length identifier 68 which gives the length of the EMM, an optional address 70 for the EMM, an operator identifier 72 and a key identifier 74. Finally, the signature 64, which is also optional, provides a number of checks against corruption of the remaining data in the EMM. The type identifier in the header identifies the message as an EMM.

The format of an EMM was originally chosen to be suitable for direct insertion into the MPEG-2 program stream. However, in the case of the preferred embodiment, EMMs are encapsulated and transmitted to at least one receiver/decoder using Internet Protocol (IP); suitable alternatives, such as DECNET, may also be used. Features relating to the encapsulation of EMMs and the transmission of data to receiver/decoders using Internet Protocol (IP) will be discussed in more detail later.

### Subscriber Authorization System (SAS)

Referring again to Figure 8, messages generated by the SMS 32 are passed via linkage 34 to the Subscriber Authorization System (SAS) 30, which in turn generates messages acknowledging receipt of the messages generated by the SMS 32 and passes these acknowledgements to the SMS 32. Messages which may be passed to the SAS include subscriber suspension, for example, due to non-payment, subscriber modification, for example to add or remove certain commercial offers, and provide rights, for example for a specific event in PPV mode.

The SAS 30 manages databases that store the status of all subscribers declared by the SMS 32. According to the status and the various messages sent by the SMS, the SAS generates EMMs for the subscribers' smartcards.

The EMMs are ciphered by the SAS cyphering units 36 and then transmitted to the addressed subscribers.

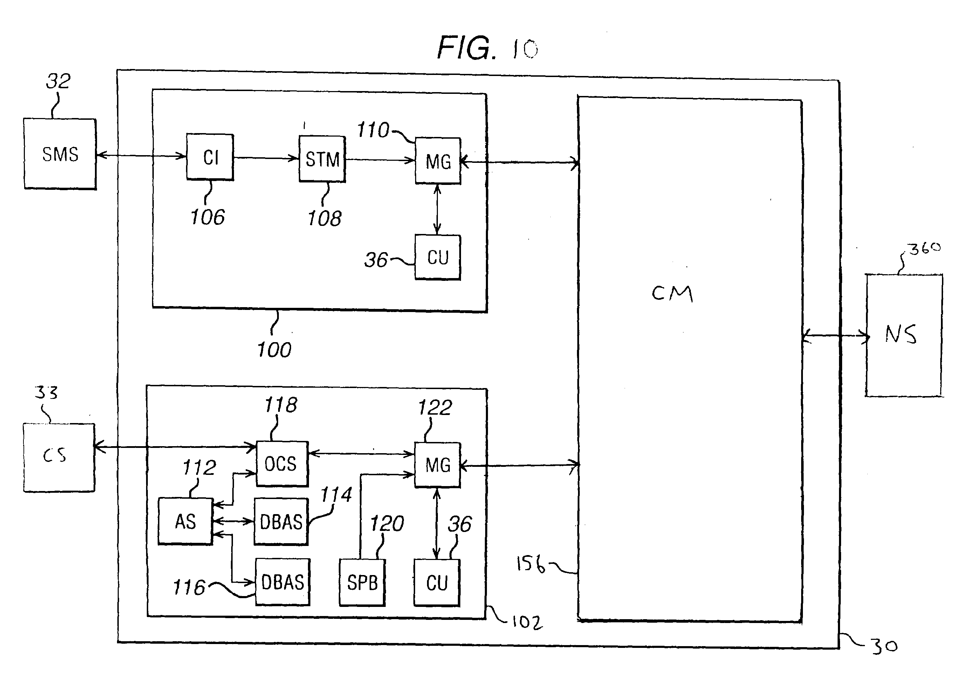

A typical configuration of the SAS 30 is shown in Figure 10. In overview the SAS 30 comprises a Subscription Chain area 100 to give rights for subscription mode and to renew the rights automatically each month, a Pay Per View (PPV) Chain area 102 to give rights for PPV events, and an EMM Communications Manager 156 which oversees the transmission of EMMs to receiver/decoders via the Network Server 360. If other rights are to be granted, such as Pay Per File (PPF) rights in the case of downloading computer software to a user's Personal Computer, other similar areas are also provided.

One function of the SAS 30 is to manage the access rights to television programmes, available as commercial offers in subscription mode or sold as PPV events according to different modes of commercialisation (pre-book mode, impulse mode). The SAS 30, according to those rights and from information received from the SMS 32, generates EMMs for the subscriber.

The Subscription Chain area 100 comprises a Command Interface (CI) 106, a Subscriber Technical Management (STM) server 108, a Message Generator (MG) 110, and the Ciphering Unit 36. The PPV Chain area 102 comprises an Authorisation Server (AS) 112, Database Servers 114, 116 which contain relational databases for storing relevant details of the end users, Order Centralized Server (OCS) 118, a Server for Programme Broadcaster (SPB) 120, a Message Generator (MG) 122 whose function is basically the same as that for the Subscription Chain area, and Ciphering Unit 36.

Communications Servers 33 are provided to allow receiver/decoders to communicate with the Order Centralized Server 118. In the preferred embodiment, the Communications Servers are connected to the cable network 300 via the bidirectional linkage 346 (the connection not shown). In variants of the preferred embodiment, however, receiver/decoders connect to the Communications Servers by telephone, and/or using other links between the broadcast centre and the cable network.

The Message Generators 110 and 122 transform commands issued by the STM 108 and the OCS 118, respectively, into EMMs. The EMMs are then encrypted using a dedicated ciphering unit.

The EMM Communications Manager 156 accepts EMMs from the Subscription Chain area 100 and the PPV Chain area 102, and oversees the delivery of the EMMs to the addressed receiver/decoders.

### The Network Server

With reference to Figure 4, as mentioned above, the main function of the Network Server 360 is to route data between the broadcast centre 140 and the subscriber sites (not shown) of which the site 310 is an example. The Network Server is an important element of the broadcast system described herein, and specifically, it allows data to be sent to a receiver/decoder by routing the data to the receiver/decoder. The Network Server is essentially a specialised router, but in variants of the preferred embodiment may take other forms, such as more generic routers, and may be used in conjunction with other Network Servers or routers.

The receiver/decoder to which the data is routed is selected from a plurality of receiver/decoders; that is to say, there is a one-to-one relationship between the broadcast centre (for example) and the receiving receiver/decoder, as opposed to the one-to-many relationship between the broadcast centre and the receiving receiver/decoders in the case when data is broadcast.

To assist the task of routing the data, an address is assigned to the receiver/decoder, as will be described in more detail below. In addition, a transmission protocol incorporating addressing information is used, whereby an address is assigned to the data, this address specifying the receiver/decoder to which the data is to be routed. Using the address, or otherwise, a path is selected between the sender of the data and the receiver/decoder, and the data is sent along the selected path.

From the point of view of a single receiver/decoder 13 attached to the Network Server via the link 340, there is effectively a filtering of the data leaving the broadcast centre along the link 346 (such data typically containing different packets addressed to a plurality of receiver/decoders, and the receiver/decoder in question typically only being interested in data packets addressed to itself). In the preferred embodiment, the data is filtered entirely by the Network Server 360, such that the Network Server only sends data packets which are addressed to the receiver/decoder to that receiver/decoder (via the link 340), hence requiring no further filtering or discrimination of the data by the receiver/decoder.

In a variant of the preferred embodiment, some filtering occurs at the Network Server, and some filtering occurs at the receiver/decoder, with the addition of software in the receiver/decoder which only selects and processes those data packets which are addressed to the receiver/decoder. In a further variant, the Network Server performs little or no filtering, and the receiver/decoder performs the majority of or all of the filtering. Whilst this latter variant can result in a greatly simplified Network Server, more bandwidth may be required in the link 340 to carry the resultant extra data.

The receiver/decoder can also route data to a destination device which is attached, directly or indirectly, to the Network Server 360; it is noted that the principles described herein with regard to the transmission of data from a device to a receiver/decoder can also be applied to the transmission of data from a receiver/decoder to a device.

In the preferred embodiment, the data is sent using the TCP/IP protocol, which furthermore allows a connection to be made between two entities in the cable network. Thus, the broadcasting centre 140 can initiate a TCP/IP connection with a receiver/decoder 13, and transmit information directly to the receiver/decoder 13 over the connection. Similarly, a receiver/decoder 13 can initiate a TCP/IP connection either with the broadcasting centre 140 or optionally with a second receiver/decoder (not shown) also attached to the Network Server. Other packet-based or circuit-based protocols may be used instead of, or as well as, TCP/IP. Data can also be sent by the broadcast centre 140 to a subscriber site 310 without initiating a connection, and *vice versa.*

As mentioned above, the Network Server 360 is connected both to the HFC cable television distribution network, to which the plurality of subscriber sites 350 are attached, and to an internal network 346 in the broadcasting centre 140; in effect, the Network Server acts as a gateway for IP traffic between the two networks. Although the Network Server is functionally comprised within the cable network 300, physically it is located within the broadcast centre (for convenience and ease of maintenance). In variants of the preferred embodiment, the Network Server is physically located within other installations associated with the cable network.

In the preferred embodiment, the IP traffic is transmitted between the Network Server and receiver/decoders using out-of-band (OOB) channels in the cable network, but in-band channels may also be used. Transmission and reception in the out-of-band channels is by means of the receiver/decoder's cable modem described above.

### The Address Server

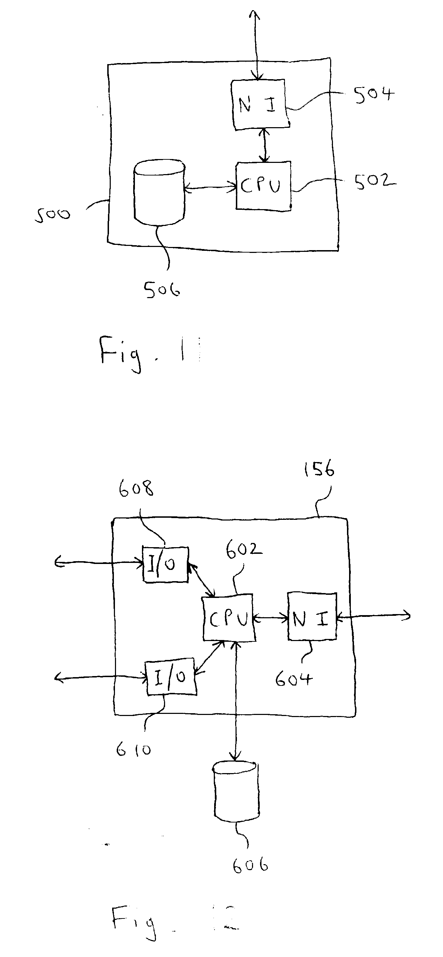

With reference to Figure 11, in order to allow different components of the broadcast centre and other components of the broadcast system to address data to a particular receiver/decoder, an Address Server 500 is provided. The Address Server forms another important part of the broadcast system as described herein, and translates identifiers of receiver/decoders into addresses. The various means by which addresses of receiver/decoders are generated are discussed later.

The server 500 comprises a network interface 504, a processor 502 and a memory store 506. In the preferred embodiment, the server 500 is provided as an independent device attached to a network within the broadcast centre. In variants of the preferred embodiment, however, the server is comprised within other devices within the broadcast centre, such as the SAS 30, SMS 32 or interactive system 172, or within other devices outside the broadcast centre, such as the Network Server 360. When the server is comprised within another device, all of its components (memory, CPU and network interface) may be shared with the device.

A set of addresses assigned to a set of corresponding receiver/decoders is stored in the memory 506 and for each stored address, a corresponding receiver/decoder identifier is also stored. The identifiers are smartcard numbers, but in variants of the preferred embodiment the identifiers comprise other unique subscriber numbers and names, such as a user domain name. In further variants, more than one address and/or identifier is stored in relation to one receiver/decoder.

The server 500, and specifically the network interface 504, is adapted to receive from client devices (not shown) requests to translate an identifier of a receiver/decoder into an address, the requests themselves comprising the identifier to be translated. The processor 502 arbitrates the requests to produce the required addresses, in each case by finding a stored identifier matching the identifier supplied in the request, and reading the corresponding stored address. The found addresses are then sent back via the network interface 504 to the client devices which sent the requests. The client devices may be any devices having access to the cable network 300 (such as receiver/decoders) or, for example, the network 346 within the broadcast centre (such as the SAS 30).

In variants of the preferred embodiment, the step of storing identifiers corresponding to the stored addresses is omitted, and the process of arbitrating the requests is performed by other means, such as relying on mathematical functions to map identifiers to addresses. Such other means, of course, may depend on the method employed to assign addresses to the receiver/decoders.

Various methods may be used to return the translated addresses to the client devices, including forwarding the addresses over networks and broadcasting the translated addresses in the programme stream.

### Address generation

The generation of the addresses of the receiver/decoders in the broadcast system is an important element of the broadcast system, and will now be discussed further.

To give some background, in order for IP packets to be delivered to a receiver/decoder, an IP address should preferably be assigned to the receiver/decoder (although other transmission protocols may not impose this restriction). In addition, for the network to operate correctly, it is preferable for the IP address to be unique with respect to the IP addresses assigned to other receiver/decoders in the network. A receiver/decoder may be used with a variety of different networks and a variety of different service providers, each of which may desire to register their own range of IP addresses for use with the receiver/decoders in their cable distribution network.

Usually in the situation described above, it is therefore not practical to register an IP address for each receiver/decoder prior to sale, and other methods by which a network address, for example an IP address, can be assigned to a receiver/decoder must be found. Five such methods will now be described.

With reference to Figure 11, in the first method, employed in the preferred embodiment, the Address Server 500 performs the additional function of allocating IP addresses to receiver/decoders from a 'pool' of unique IP addresses maintained within the memory 506.

When a receiver/decoder 13 is switched on, the software in the receiver/decoder sends a message containing the unique smartcard ID of its smartcard 240 to the Address Server 500 to request an IP address. The Address Server 500 then allocates one of the addresses in the pool of IP addresses to the receiver/decoder 13, and sends a message back to the receiver/decoder containing the IP address. The receiver/decoder 13 then extracts the IP address, and stores it for future use.

The IP address allocated to a receiver/decoder remains valid until the receiver/decoder is switched off, or until a predetermined time limit expires. As described above, the address of the receiver/decoder is dynamically assigned.

The additional functionality of the Address Server 500 described herein with regard to assigning addresses can be implemented by other devices; in variants of the preferred embodiment, the Network Server 360 (not shown), a separate Address Management Server (not shown), and/or a sub-module within any of the components of the broadcast system perform the task of allocating addresses to receiver/decoders.

In a further variant of the preferred embodiment, a second addressing scheme is provided, whereby the Address Server 500 allocates an IP address to a receiver/decoder 13 only when it is needed, that is, whenever a command is given to send data to the receiver/decoder (or more specifically, whenever a request to translate a smartcard ID to an IP address is generated). In this case, on receipt of such a request from an initiating device, the Address Server 500 first checks to see if an IP address has been allocated for the smartcard ID in question. If it has, that address is sent to the initiating device in response to the request, and no further action is taken by the Address Server.

If no address has been allocated, however, the Address Server allocates a new IP address to the receiver/decoder in question, and broadcasts a message containing the address and the corresponding smartcard number, so that the receiver/decoder in question can be notified of its new IP address. The receiver/decoder sends confirmation to the Address Server that the it has received its new IP address, and the Address Server can then forward the IP address to the initiating device.

When the communications session between the initiating device and the receiver/decoder ends, either the initiating device or the receiver/decoder sends a message to the Address Server to indicate that the session has ended, and the IP address is then de-allocated.

In a further variation of the preferred embodiment, a third addressing scheme is provided, whereby a unique IP address is assigned to each smartcard 240. Each smartcard 240 thus stores its own IP address, together with its smartcard number. A central database (not shown) in the SMS 32 maintains a record of the IP addresses and corresponding smartcard numbers so that the broadcast centre can correlate a smartcard number with an IP address. The address of the receiver/decoders are thus statically assigned.

The Address Server 500, Network Server 360, and/or one or both of the Database Servers 114 and 112 in the PPV Chain Area 102 of the SAS 30, may maintain the database of smartcard numbers and IP addresses instead of the central database in the SMS, and they may also broadcast the IP address/smartcard ID mappings to the receiver/decoder, rather than having the IP address for each receiver/decoder permanently stored in the smartcard.

In another variation of the preferred embodiment, a fourth addressing scheme is provided, whereby the IP address of a receiver/decoder is determined using the smartcard number itself, by performing a one-to-one mapping between the used smartcard number ranges and available IP address ranges. This system would potentially require as many IP addresses to be reserved as the total number of smartcards manufactured.

In a further variation of the preferred embodiment, a fifth addressing scheme is provided, whereby the broadcast centre 140 places the smartcard ID and associated IP address of a receiver/decoder into a control message, and inserts the control message into the broadcast stream. The receiver/decoder then receives the broadcast stream, validates that its smartcard ID matches that of the control message, and extracts its IP address from the stream.

Alternatively, a control message may been sent which has the effect of causing the addressed receiver/decoder or receiver/decoders to contact the broadcast centre, Address Server or Network Server to obtain an IP address.

All of the functions of the Network Server and Address Server described above may be provided independently or in any appropriate combination in different parts of the broadcast system.

### Applications of routing

The ability provided by the Network Server 360 to route packets of data around the cable network and to allow direct TCP/IP connections to be made between the broadcast centre and receiver/decoders allows a considerable simplification of conventional interactive and conditional access systems, amongst other things.

Applications of initiating connections between the broadcast centre and receiver/decoders include remotely monitoring receiver/decoders from the broadcast centre. Such monitoring may comprise transmitting rights (subscription or pay-per-view) with a guarantee of processing (as discussed below); downloading data and/or software specific to a customer profile (such as extended electronic programme guides covering selected channels of interest, personalised 'radio' channels, personalised advertisements, special offers, and so on), and conducting regular polls of each receiver/decoder (for example, to detect piracy or other tampering, to carry out automatic 'health' checks for receiver/decoders, and so on).

The particular application of routing conditional access data will now be described, although many of the principles described below can apply to the transmission of other forms of data, such as interactive data, audiovisual data and the like.

Entitlement Management Messages (EMMs) which were previously broadcast to all of the receiver/decoders, and had to be transmitted several times to improve the likelihood of reception, are instead sent directly using TCP/IP to the receiver/decoders in question.

The EMM Communications Manager 156 provides most of the functionality required to interface between the conditional access system and the TCP/IP-enabled cable network. With reference to Figure 12, the Communications Manager 156 comprises a processor 602, a network interface 604, two input/output ports 608, 610 and a memory 606.

The network interface 604 allows the processor to communicate with the Network Server 360 (not shown) via the network link 346 (not shown), and the input/output ports 608, 610 allows the processor to communicate with the Message Generators 110, 122 respectively. Any number of input/output ports may be provided as required, and it is also possible for no input/output ports to be provided, with a connection instead provided between the Message Generators and the processor 602.

The memory 606 is provided principally to hold temporary data, such as unacknowledged EMMs which need to be transmitted again, and principally serves to increase the efficiency of the Communications Manager 156. In a variant of the preferred embodiment, the memory 606 is not provided.

With reference to Figure 10, the EMMs formed by the Message Generators 110 and 122 in the Subscription Chain area 100 and PPV Chain area 102 are transmitted to the Communications Manager 156.

For each EMM transmitted to the Communications Manager 156, the Communications Manager obtains the smartcard number of each of the receiver/decoders addressed by the EMM; in the case of "unique" EMMs, the smartcard number is contained within the EMM itself. Where required, the smartcard number is requested by the Communications Manager 156 from the Message Generator 110 or 122 from which the EMM originated.

In variants of the preferred embodiment, "group" EMMs directed at more than one receiver/decoder are split into "individual" EMMs (to simplify subsequent processing) by the Communications Manager 156 or other parts of the SAS.

The IP address of each of the recipients is then obtained, in the preferred embodiment, by sending a request to the Network Server 360 to convert the smartcard number to the corresponding IP address, in accordance with the IP address mapping scheme detailed above. In other embodiments, the request is handled by other parts of the broadcasting system, such as the Subscriber Management System 32, for example, in the case where IP addresses are permanently associated with smartcards and are stored in the subscriber records.

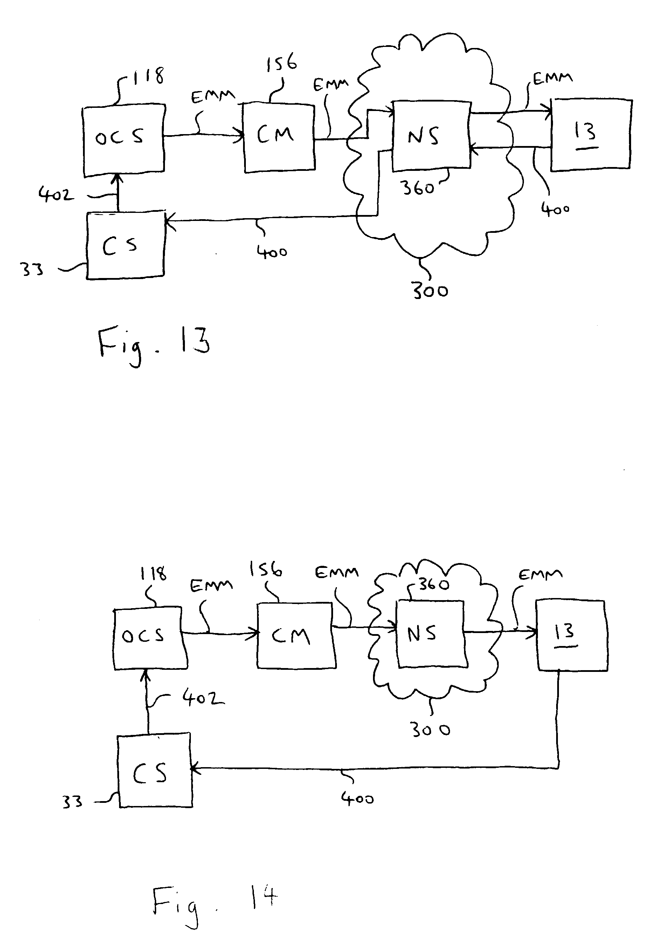

With reference to Figure 13, in the preferred embodiment, each EMM is then encapsulated within IP packets and transmitted to the Network Server 360 for forwarding to the addressed receiver/decoder, but no connection is opened with the receiver/decoder in question.

On receipt of the EMM by the receiver/decoder, for the case where the EMM was generated by the PPV Chain area, the receiver/decoder sends an acknowledgement message 400 to the Communications Servers 33 to confirm receipt of the EMM. The Communications Servers 33 then pass on a further acknowledgement message 402 to the Order Centralized Server 118, which takes note of the message. Further action, for example updating the subscriber records in the SMS 32 to reflect the confirmation that certain rights had been received by the subscriber, can then be taken. In a variant of the preferred embodiment, briefly described below, the acknowledgement message is alternatively sent via the Communications Manager 156.

As illustrated above, the receiver/decoder can send (further) data back to the originator of the data which was sent to the receiver/decoder.

The method of encapsulation of an EMM is similar to that conventionally used to transmit large amounts of data using IP packets, whereby the EMM data is divided into a plurality of consecutive portions and each portion is sent using a different IP packet, the length of all of the portions typically being uniform and compatible with the standard IP packet size. A reference is also provided in each packet to allow the portions to be easily reassembled by the entity receiving the packets.

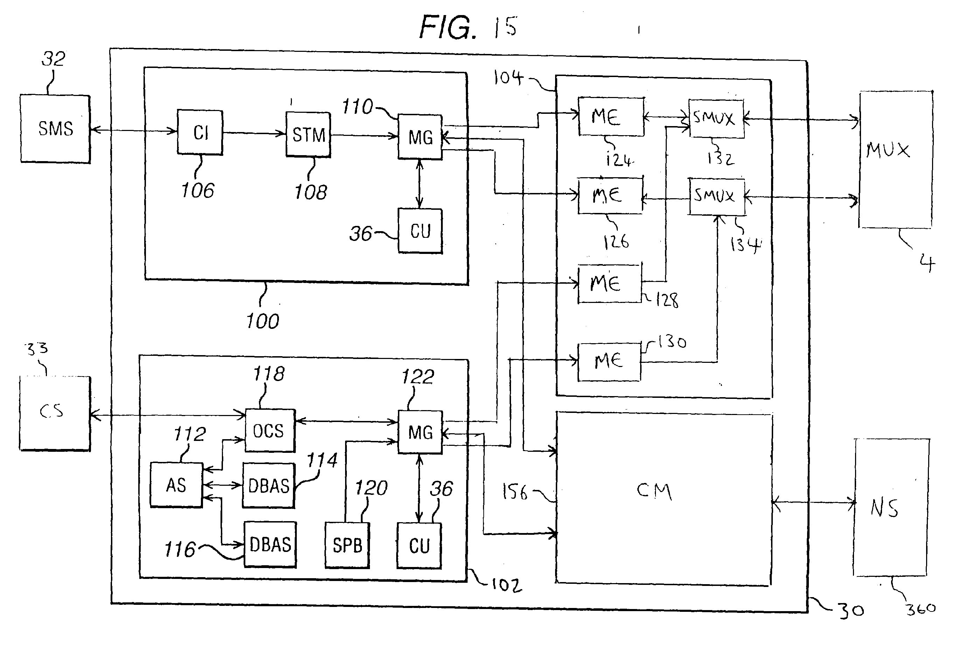

Figure 13 illustrates the case where the acknowledgement message 400 is sent via the cable network (the broadcast medium), and is therefore handled by the Network Server 360. In a variant of the preferred embodiment, as illustrated in Figure 14, a telephone or other connection is made directly between the receiver/decoder 13 and the Communications Servers 33, bypassing the cable network 300 and Network Server 360.

In a further variant of the preferred embodiment, the Communications Manager 156 instead initiates (or attempts to initiate) a TCP/IP connection with each of the addressed receiver/decoders in turn, instead of 'posting' the EMMs in a connectionless fashion; the order in which the connections are made usually does not matter, although considerations of the particular cable network configuration and the configuration of the Network Server may dictate a preferred order.

For each receiver/decoder, if a TCP/IP session can be opened, the EMM is converted into IP packets and delivered to the receiver/decoder as before. Further information, including a confirmation of receipt of the EMM by the receiver/decoder, can be exchanged between the Communications Manager 156 and the receiver/decoder 13, after which the session is closed. Although the TCP/IP protocol can provide confirmation that the EMM has been received, it does not provide confirmation that the EMM has been received and processed by the conditional access smartcard. Thus, a specific confirmation of the receipt of the EMM is sent by the receiver/decoder 13 to the Communications Manager when it is clear that the EMM has been received and processed by the smartcard. The net traffic produced by such confirmations of receipt may in some cases be undesirable, and in a variant of the preferred embodiment, the specific confirmations of receipt are not sent.

In another variant of the preferred embodiment, a message is sent after each session is closed to the Address Server 500, Network Server 360, or other appropriate device, to instruct the device to de-allocate the IP address for the receiver/decoder (if required). More typically, however, the IP address de-allocation only occurs after a physical disconnection of the box from the network.

If a session cannot be opened with a receiver/decoder, for example if the receiver/decoder in question is switched off, the Communications Manager 156 will periodically reattempt the connection until successful, for a number of times and after a certain delay which are both predetermined by the Message Generator.

After a connection has been made and the EMM transferred, the Communications Manager 156 may optionally inform the appropriate Message Generator 110 or 122 that the EMM was delivered to the specific receiver/decoder, by use of an acknowledgement message.

If a connection could not be made with a specific receiver/decoder after the predetermined number of attempts, the Communications Manager also informs the appropriate Message Generator 110 or 122. Similarly, further action can then be taken to record the fact that certain rights were not in fact received by the subscriber.

It is noted that even with multiple attempts made by the SAS 30 to initiate a connection with a receiver/decoder, the conditional access data itself is usually only sent once, when the connection is initiated.

In a further variant of the preferred embodiment, it is possible for a receiver/decoder 13 to initiate a connection with the OCS 118 via the Network Server 360 and Communications Servers 33, in order to request certain rights or to transmit other information as required, for example (although in a variant of the preferred embodiment, the connection is initiated via the Communications Manager 156). If a subscriber wishes to purchase rights to a Pay-Per-View event, for example, the receiver/decoder initiates a connection to the Communications Servers 33 and transmits the request. The Communications Servers 33 then pass on the request to the Order Centralized Server 118. If the request is deemed acceptable by the Authorization Server 112, the requested rights are then transmitted to the user in the form of an EMM in the manner described above.

In the preferred embodiment, the format of the EMM includes potentially redundant data, such as the address and signature fields, which are duplicated to a certain extent by the TCP/IP protocol. In a further variant of the preferred embodiment, to avoid transferring potentially redundant data to the receiver/decoder 13, a more compact form of message is used, without the address and signature fields and, optionally, without certain other unnecessary fields.

With reference to Figure 15, a second embodiment allows an EMM to be broadcast in the programme stream as well as routed to a receiver/decoder in the manner described above. An EMM injector 104 is provided in the SAS 30 in parallel with the Communications Manager 156, and is connected to the two Message Generators 110 and 122, and the multiplexer and scrambler 4.

The EMM injector is described in detail in European Patent Application No. 0 968 609, but a brief description follows.

The EMM injector comprises four Message Emitters 124, 126, 128 and 130 and two Software Multiplexers 132 and 134. EMMs are passed to the EMM injector 104 by the Message Generators 110 and 122, and the EMMs are repeatedly 'cycled' and output to the multiplexer and scrambler 4 by the Message Emitters 124, 126, 128 and 130 via the Software Multiplexers 132 and 134 in accordance with a global bitrate directive specified by the multiplexer and scrambler 4.

The cycling, or retransmission, of an EMM increases the likelihood of its reception by a receiver/decoder, and is preferably used because, in contrast to the Communications Manager 156, the EMM injector has no direct means of establishing whether a given receiver/decoder has received a given broadcast EMM.

For any given EMM, the Message Generators 110 and 122 decide whether to send it to the EMM injector or the Communications Manager. The former route is typically used for EMMs with large audiences, where it is simpler and computationally more efficient to broadcast the EMM once instead of routing it several times.

The EMM Communications Manager 156 described above is not restricted to use as part of an SAS, or for use with conditional access data (and specifically EMMs), but can also be incorporated into other systems where automated routing of data, not necessarily to receiver/decoders, is required. It finds particular application in conjunction with data distribution systems that are not adapted to interface with data networks of the type described herein, or that require an automated retransmission and acknowledgement system.

Whilst the use of TCP/IP connections initiated by the broadcast centre has been described with reference to the interchange of conditional access data, the same methods may be applied in other contexts, such as the provision of 'push' interactive services, where a TCP/IP connection delivering interactive data is initiated by the broadcast centre, or any other services requiring or benefiting from a TCP/IP connection between a broadcast centre and a subset of the subscriber sites 350.

Entitlement Control Messages (ECMs) described above, and other similar types of conditional access data, can also be routed to receiver/decoders instead of being broadcast in the programme stream, freeing up bandwidth in the programme stream. A corresponding increase in capacity, considerably larger than that required to route EMMs, is required in the network carrying the routed ECMs, and certain strict latency requirements are imposed. These requirements can be alleviated by sending ECMs for a given programme substantially in advance of when they are needed, while at the same time incorporating timing information, meaningful in the context of the programme stream, within the ECM to allow synchronization with the programme stream.

Other applications of routing will now briefly be described.

In the same way that a receiver/decoder 13 may initiate a TCP/IP connection with the Communications Manager 156 in the conditional access system 168 via the Network Server 360, a connection may also be initiated between a receiver/decoder 13 and a component in the interactive system 172 which performs a similar function to the Communications Manager 156. Thus, a receiver/decoder may easily request certain information or services directly from the interactive system 172, and the interactive system 172 may in turn initiate a connection with any receiver/decoder via the Network Server 360 to deliver information of various kinds to the receiver/decoder in a secure and efficient manner.

Further interaction, involving direct TCP/IP connections between a plurality of individual receiver/decoders, where one of the receiver/decoders initiates the connection, is also possible, using the Network Server as an intermediary, in a manner described for example with reference to Figure 1 or 2. Applications of this include online gaming, email and chat lines, and so on.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A method of sending data to a receiver/decoder in a broadcast system which broadcasts a signal via a broadcast medium, the method comprising routing the data to the receiver/decoder via the same broadcast medium.

2. A method according to Claim 1, wherein the receiver/decoder is selected from a plurality of receiver/decoders.

3. A method according to Claim 1 or 2, further comprising selecting a path between a sender of the data and the receiver/decoder, and sending the data along the selected path.

4. A method according to any of the preceding claims, further comprising assigning an address to the data, the receiver/decoder to which the data is to be routed being specified by the address.

5. A method according to any preceding claim, further comprising assigning an address to the receiver/decoder.

6. A method according to Claim 5, wherein the address of the receiver/decoder is statically assigned.

7. A method according to Claim 5 or 6, wherein the address of the receiver/decoder is generated using an identifier of the receiver/decoder.

8. A method according to Claim 7, wherein the identifier relates to a smartcard connected to the receiver/decoder.

9. A method according to Claim 5, wherein the address of the receiver/decoder is dynamically assigned.

10. A method according to Claim 5 or 9, further comprising receiving a command to send the data, before an address is assigned to the receiver/decoder.

11. A method according to any of Claims 5, 9 or 10, further comprising selecting the address of the receiver/decoder from a plurality of predetermined addresses.

12. A method according to any of Claims 5 to 11, further comprising receiving the broadcast signal at the receiver/decoder, and extracting the address of the receiver/decoder from the broadcast signal.

13. A method according to any of Claims 5 to 12, further comprising inserting the address of the receiver/decoder into the broadcast signal.

14. A method according to any of Claims 5 to 13, further comprising storing the address of the receiver/decoder, receiving a request from a client device, the request containing a reference, associating the reference with the stored address, and transmitting the stored address to the client device.

15. A method according to any of the preceding claims, the method further comprising initiating a connection between a sender of the data and the receiver/decoder.

16. A method of sending data from a sender of the data to a receiver/decoder in a broadcast system which broadcasts a signal via a broadcast medium, comprising initiating at the sender a connection between the sender of the data and the receiver/decoder, and sending the data to the receiver/decoder via the connection.

17. A method according to any of the preceding claims, wherein the data is sent from a broadcast centre.

18. A method according to any of the preceding claims, wherein the data comprises conditional access data.

19. A method according to any of the preceding claims, further comprising sending data from the receiver/decoder in response to the data sent to the receiver/decoder.

20. A method according to Claim 19, wherein the data sent from the receiver/decoder comprises a message to acknowledge receipt of the data sent to the receiver/decoder.

21. A method according to any of the preceding claims, further comprising routing data from the receiver/decoder to a destination device, preferably via the broadcast medium.

22. A method of sending data to a destination device from a receiver/decoder in a broadcast system which broadcasts a signal via a broadcast medium, comprising routing the data to the destination device via the broadcast medium.

23. A method according to Claim 21 or 22, wherein the data sent by the receiver/decoder comprises conditional access data.

24. A receiver/decoder adapted to receive routed data from a broadcast medium.

25. A broadcast centre adapted to route data to a receiver/decoder via a broadcast medium.

26. A conditional access system adapted to route conditional access data to a receiver/decoder.

27. A broadcast centre, comprising the conditional access system of Claim 26.

28. A server, adapted to store an address of a receiver/decoder, receive a request from a client device, the request containing an identifier of the receiver/decoder, associate the identifier with the stored address, and transmit the stored address to the client device.

29. A packet adapted to be routed to a receiver/decoder, comprising a network address of the receiver/decoder and a portion of data.

30. A packet adapted to be routed to a broadcast centre, comprising a network address of the broadcast centre and a portion of data.

31. A carrier signal embodying a packet as claimed in Claim 29 or 30.

32. A broadcast system, comprising a broadcast centre as claimed in Claim 25 or 27, a receiver/decoder as claimed in Claim 24, and a router adapted to route data between the broadcast centre and the receiver/decoder.

33. A computer program product adapted to modify a receiver/decoder to receive routed data.

34. A computer program product adapted to modify a conditional access system to route conditional access data to a receiver/decoder.

35. A carrier signal embodying a computer program product as claimed in Claim 33 or 34.

36. A computer readable medium embodying a computer program product as claimed in Claim 33 or 34.
